# FASCICULE DE BREVET EUROPEEN

(11) **EP 2 870 006 B1**
(45) Date de publication et mention de la délivrance du brevet: **16.11.2016**
(21) Numéro de dépôt: 13732546.0
(22) Date de dépôt: 01.07.2013
(51) Int. Cl.: B60C 15/06, B60C 15/00, B60C 1/00, B60C 9/02

(54) **BOURRELET DE PNEUMATIQUE POUR VEHICULE LOURD DE TYPE GENIE CIVIL**
REIFENWULST FÜR SCHWERLASTFAHRZEUGE VOM BAUGERÄTETYP
TYRE BEAD FOR HEAVY GOODS VEHICLES OF CONSTRUCTION PLANT TYPE

(30) Priorité: 04.07.2012 FR 1256417
(43) Date de publication de la demande: 13.05.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: KOLLIAS, Athanase, F-63040 Clermont-Ferrand Cedex 9 (FR)
(74) Mandataire: Millanvois, Patrick Jacques Jean
(86) Numéro de dépôt international: PCT/EP2013/063779
(87) Numéro de publication internationale: WO 2014/005970

(56) Documents cités:
- EP-A2- 0 251 145
- WO-A1-2012/036292
- FR-A1- 2 953 459
- US-A- 5 056 575

## Description

La présente invention concerne un pneumatique radial destiné à équiper un véhicule lourd de type génie civil.

Bien que non limitée à ce type d'application, l'invention sera plus particulièrement décrite en référence à un pneumatique radial de grande dimension, destiné, par exemple, à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est au moins égal à 25 pouces.

Un pneumatique comprend deux bourrelets, assurant la liaison mécanique entre le pneumatique et la jante sur laquelle il est monté, les bourrelets étant réunis respectivement par l'intermédiaire de deux flancs à une bande de roulement, destinée à venir en contact avec le sol par l'intermédiaire d'une surface de roulement.

Dans ce qui suit, les directions circonférentielle, axiale et radiale désignent respectivement une direction tangente à la surface de roulement selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type génie civil comprend habituellement au moins une couche de carcasse constituée de renforts généralement métalliques enrobés d'un mélange d'enrobage. La couche de carcasse comprend une partie principale, reliant les deux bourrelets entre eux et s'enroulant, dans chaque bourrelet, de l'intérieur vers l'extérieur du pneumatique autour d'une tringle pour former un retournement. Les renforts métalliques sont sensiblement parallèles entre eux et font, avec la direction circonférentielle, un angle compris entre 85° et 95°, pour la partie principale, et un angle compris entre 75° et 105°, pour le retournement.

La tringle est constituée d'un élément de renforcement circonférentiel, généralement métallique entouré d'au moins un matériau, de manière non exhaustive, polymérique ou textile. La portion de tringle en contact avec l'armature de carcasse contribue à la reprise des efforts de tension dans l'armature de carcasse au gonflage, par couplage avec l'armature de carcasse. Cette contribution à la reprise d'efforts de tension dépend de la rigidité de torsion de la tringle et de la longueur du retournement. Dans le cas usuel d'une forte rigidité de torsion de la tringle, les efforts de tension au gonflage sont essentiellement repris par la tringle, avec une contribution secondaire du retournement.

Le retournement, dans chaque bourrelet, permet l'ancrage de la couche de carcasse à la tringle du bourrelet. Dans le cas d'un pneumatique pour véhicule lourd de type génie civil, le retournement est généralement long, c'est-à-dire que son extrémité libre est radialement plus proche du point le plus axialement extérieur de l'armature de carcasse, au niveau du flanc du pneumatique, que du point le plus axialement extérieur de la tringle.

Chaque bourrelet comprend également un élément de remplissage prolongeant radialement vers l'extérieur la tringle et de forme sensiblement triangulaire. L'élément de remplissage est constitué d'au moins un mélange de remplissage, et souvent constitué d'un empilage, selon la direction radiale, d'au moins deux mélanges de remplissage de compositions chimiques différentes. Dans le domaine du pneumatique, on appelle mélange un matériau polymérique usuellement obtenu par mélangeage des composants du matériau. En outre, l'élément de remplissage sépare axialement la partie principale et le retournement.

Un mélange, après cuisson, est caractérisé mécaniquement par des caractéristiques de contrainte-déformation en traction, déterminées par des essais de traction. Ces essais de traction sont effectués par l'homme du métier, sur une éprouvette, selon une méthode connue, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement d'un mélange, exprimé en méga pascals (MPa), la contrainte de traction mesurée pour un allongement de 10% de l'éprouvette.

Un mélange, après cuisson, est également caractérisé mécaniquement par sa dureté. La dureté est notamment définie par la dureté Shore A déterminée conformément à la norme ASTM D 2240-86.

Au cours du roulage du véhicule, le pneumatique, monté sur sa jante, gonflé et écrasé sous la charge du véhicule, est soumis à des cycles de flexion, en particulier au niveau de ses bourrelets et de ses flancs.

Les cycles de flexion entraînent en particulier des contraintes et des déformations principalement de cisaillement et de compression, dans les mélanges de remplissage, en raison de la flexion du bourrelet sur le rebord de jante.

Le document EP 2216189 décrit un bourrelet de pneumatique dont l'endurance est améliorée par une réduction des déformations de compression dans le retournement, lors de la flexion du bourrelet sur la jante, en utilisation. Cet objectif est atteint grâce à un retournement tel que la distance entre le retournement et la partie principale décroît continûment, radialement vers l'extérieur, à partir de la tringle, jusqu'à une distance minimale, puis augmente continûment jusqu'à une distance maximale. Le retournement s'étend radialement à l'extérieur du point du retournement correspondant à la distance maximale entre le retournement et la partie principale.

Le document JP 2010274862 décrit également un bourrelet de pneumatique dont l'endurance est améliorée, lors de la flexion du bourrelet sur la jante en utilisation, dans le cas d'un bourrelet, tel que décrit par le document EP 2216189, avec un retournement tel que la distance entre le retournement et la partie principale décroît continûment, radialement vers l'extérieur, à partir de la tringle, jusqu'à une distance minimale, puis augmente continûment jusqu'à une distance maximale. Cet objectif est atteint grâce à la présence d'un élément de remplissage entre la partie principale et le retournement, comprenant un premier mélange dur, s'étendant radialement vers l'extérieur depuis la tringle, et un deuxième mélange de remplissage, s'étendant radialement vers l'extérieur depuis le premier mélange dur. Le deuxième mélange de remplissage est présent au moins en partie dans la zone où la distance entre la partie principale et le retournement est minimale. Cette conception permet de diminuer les efforts de cisaillement dans cette zone et donc d'améliorer encore l'endurance du bourrelet.

Un pneumatique pour véhicule lourd est décrit dans le document US-A-5056575.

Les inventeurs se sont donnés pour objectif d'améliorer encore l'endurance des bourrelets d'un pneumatique radial pour véhicule lourd de type génie civil.

Cet objectif a été atteint, selon l'invention, par un pneumatique pour véhicule lourd de type génie civil comprenant :
- deux bourrelets destinés à entrer en contact avec une jante,
- une armature de carcasse comprenant au moins une couche de carcasse comprenant une partie principale s'enroulant dans chaque bourrelet, de l'intérieur vers l'extérieur du pneumatique, autour d'une tringle de section méridienne sensiblement circulaire de diamètre D, pour former un retournement,
- la distance entre le retournement et la partie principale décroissant continûment, radialement vers l'extérieur, à partir de la tringle, et passant par une valeur minimale,
- la couche de carcasse étant constituée de renforts parallèles entre eux, enrobés dans un mélange d'enrobage,
- un élément de remplissage s'étendant axialement entre le retournement et la partie principale et radialement vers l'extérieur à partir de la tringle,
- l'élément de remplissage comprenant au moins deux mélanges de remplissage,
- un premier mélange de remplissage s'étendant radialement vers l'extérieur à partir de la tringle,
- le premier mélange de remplissage ayant un module d'élasticité à 10% d'allongement au moins égal au module d'élasticité à 10% d'allongement d'un deuxième mélange de remplissage,
- le deuxième mélange de remplissage s'étendant, radialement vers l'extérieur, à partir de la tringle, le long du retournement, au moins jusqu'au point du retournement, positionné à la distance minimale de la partie principale, et s'étendant , au moins en partie, axialement vers l'extérieur, à partir du premier mélange de remplissage,
- et le module d'élasticité à 10% d'allongement du deuxième mélange de remplissage étant égal au module d'élasticité à 10% d'allongement du mélange d'enrobage.

Selon l'invention, le deuxième mélange de remplissage, s'étend radialement vers l'extérieur, à partir de la tringle, le long du retournement, et, au moins en partie, axialement vers l'extérieur, à partir du premier mélange de remplissage : il est nécessairement, au moins en partie, axialement compris entre le retournement et le premier mélange de remplissage. En d'autres termes, le deuxième mélange de remplissage est, au moins en partie, intercalé entre le mélange d'enrobage des renforts du retournement et le premier mélange de remplissage. De plus, le deuxième mélange de remplissage s'étend radialement au moins jusqu'au point du retournement, positionné à la distance minimale de la partie principale. Ceci implique que le deuxième mélange de remplissage est présent dans la zone de rétrécissement entre le retournement et la partie principale.

Outre la présence du deuxième mélange de remplissage, le long du retournement, depuis la tringle jusqu'à la zone de rétrécissement entre le retournement et la partie principale, une autre caractéristique essentielle de l'invention est que le module d'élasticité à 10% d'allongement du deuxième mélange de remplissage est égal au module d'élasticité à 10% d'allongement du mélange d'enrobage.

La zone de contact entre le retournement, ou plus précisément le mélange d'enrobage des renforts du retournement, et l'élément de remplissage, à proximité du point le plus radialement extérieur de la tringle, est sensible à la décohésion induite par les sollicitations mécaniques élevées dans cette zone en raison de la flexion cyclique des bourrelets sur les rebords de jante.

Le deuxième mélange de remplissage ayant un module d'élasticité égal à celui du mélange d'enrobage avec lequel il est en contact, il n'y a pas de gradient rigidité à l'interface entre le deuxième mélange de remplissage et le mélange d'enrobage: d'où une désensibilisation à la décohésion dans cette zone de contact.

De plus, compte tenu du fait que le premier mélange de remplissage a un module d'élasticité à 10% d'allongement au moins égal au module d'élasticité à 10% d'allongement d'un deuxième mélange de remplissage, les modules d'élasticité, et donc les rigidités, des matériaux sont décroissants depuis la partie principale jusqu'au retournement. Ceci contribue à une évolution progressive des sollicitations entre la partie principale et le retournement.

Préférentiellement, le deuxième mélange de remplissage a la même composition chimique que le mélange d'enrobage. La cohésion de l'interface entre les deux matériaux est encore améliorée du fait de l'identité de leurs compositions chimiques.

Il est avantageux que la distance axiale entre le premier mélange de remplissage et le retournement, mesurée selon la droite axiale passant par le point le plus radialement extérieur de la tringle, soit au moins égale à 0.15 fois le diamètre D de la tringle. En d'autres termes, l'épaisseur du deuxième mélange de remplissage, au niveau du point le plus radialement extérieur de la tringle, doit avoir une valeur minimale. La nécessité d'une telle valeur minimale d'épaisseur est imposée par le procédé de fabrication qui a, comme limite technologique, une épaisseur minimale du mélange. De plus, une telle valeur minimale d'épaisseur est nécessaire pour obtenir un étagement significatif des rigidités entre la partie principale et le retournement.

Selon un autre mode de réalisation, le point, le plus radialement extérieur du premier mélange de remplissage, et en contact avec la partie principale, est radialement intérieur au point du retournement, positionné à la distance minimale de la partie principale. Cette configuration implique que le premier mélange de remplissage à fort module d'élasticité n'est pas présent dans la zone de distance minimale entre le retournement et la partie principale ou zone d'épaisseur minimale de l'élément de remplissage. Autrement dit, la zone d'épaisseur minimale de l'élément de remplissage est intégralement remplie par le deuxième mélange de remplissage à plus faible module d'élasticité proche de celui du mélange d'enrobage. Le faible gradient de rigidités résultant, dans cette zone d'épaisseur minimale soumise à des sollicitations de cisaillement élevées, améliore la tenue mécanique de ladite zone.

Il est avantageux d'avoir la distance radiale entre le point du retournement, positionné à la distance minimale de la partie principale, et le point le plus radialement intérieur de la tringle au moins égale à 1.5 fois le diamètre de la tringle. Cette caractéristique implique que la zone d'épaisseur minimale de l'élément de remplissage doit être à une distance radiale suffisante de la tringle, pour éviter, à l'entrée de cette zone, une courbure des renforts du retournement trop élevée : ce qui serait dommageable à la tenue en fatigue desdits renforts, et donc pénaliserait l'endurance du bourrelet.

Encore avantageusement la distance radiale entre le point du retournement, positionné à la distance minimale de la partie principale, et le point le plus radialement intérieur de la tringle est au plus égale à 4 fois le diamètre D de la tringle. Cette caractéristique implique que la zone d'épaisseur minimale de l'élément de remplissage doit être à une distance radiale de la tringle pas trop élevée, pour éviter la mise en compression des renforts du retournement: ce qui serait dommageable à la tenue en fatigue desdits renforts, et donc pénaliserait l'endurance du bourrelet.

Selon un mode de réalisation préféré, la distance entre le retournement et la partie principale croît continûment, radialement vers l'extérieur, à partir du point du retournement, positionné à la distance minimale de la partie principale, et passe par une distance maximale entre le retournement et la partie principale. Après avoir atteint une valeur minimale, la distance entre le retournement et la partie principale croît continûment, radialement vers l'extérieur, pour atteindre une valeur maximale qui n'est pas nécessairement atteinte à l'extrémité du retournement. Généralement, mais pas obligatoirement, radialement à l'extérieur du point de retournement où est atteinte cette distance maximale, la distance entre le retournement et la partie principale décroît à nouveau jusqu'à l'extrémité du retournement. La présence de cette valeur maximale entraîne un élargissement de l'élément de remplissage, qui permet une mise en tension des renforts du retournement, lors de la flexion du bourrelet sur le rebord de jante. Cette mise en tension diminue ainsi le risque de passage en compression des renforts du retournement, ce qui est favorable à la tenue en fatigue desdits renforts, et donc à l'endurance du bourrelet.

Selon un autre mode de réalisation préféré, la distance entre le retournement et la partie principale est sensiblement égale à une valeur constante, radialement vers l'extérieur, à partir du point du retournement, positionné à la distance minimale de la partie principale, sur au moins une portion du retournement. Par sensiblement constante, on entend que cette distance peut varier sensiblement entre 0.9 fois et 1.1 fois la distance minimale. La portion de retournement, pour laquelle la distance entre le retournement et la partie principale est sensiblement égale à une valeur constante, correspond à la portion de bourrelet s'enroulant sur le rebord de jante, et, plus précisément, sur la portion sensiblement circulaire et radialement extérieure du rebord de jante, lors du roulage du pneumatique. Dans cette portion de bourrelet, qui se comporte comme une poutre en flexion, la partie principale, assimilable à la fibre extérieure de la poutre, est en extension alors que le retournement, assimilable à la fibre intérieure de la poutre, est en compression. Réduire la distance entre le retournement et la partie principale revient à réduire la distance entre les fibres extérieure et intérieure de la poutre, ce qui permet de diminuer la mise en compression de la fibre intérieure, c'est-à-dire du retournement. Comme vu précédemment, cette minimisation ou cette absence de mise en compression des renforts du retournement est favorable à l'endurance du bourrelet.

Il est enfin avantageux que la distance radiale entre le point, le plus radialement extérieur du retournement, et le point, le plus radialement intérieur de la tringle, soit au moins égale à 0.8 fois la distance radiale entre le point, le plus axialement extérieur de la partie principale, et le point, le plus radialement intérieur de la tringle. En d'autres termes, le positionnement radial de l'extrémité du retournement est proche de celui du point le plus axialement extérieur de la partie principale, ce point, en lequel la tangente à la partie principale est radiale, définissant la largeur du pneumatique au niveau du flanc. Ce positionnement radial de l'extrémité du retournement est caractéristique d'un retournement dit long. Un retournement long contribue à la reprise des efforts de tension au gonflage dans la couche d'armature de carcasse, sous réserve d'une rigidité de torsion de la tringle suffisamment faible. Selon le positionnement radialement intérieur ou radialement extérieur de l'extrémité de retournement par rapport au point le plus axialement extérieur de l'armature de carcasse, lors de la flexion du flanc en roulage, l'extrémité de retournement peut être soit tirée radialement vers l'extérieur et être mise en tension, soit, au contraire, poussée radialement vers l'intérieur et être mise en compression. Donc le positionnement radial de l'extrémité du retournement conditionne le passage ou non compression du retournement.

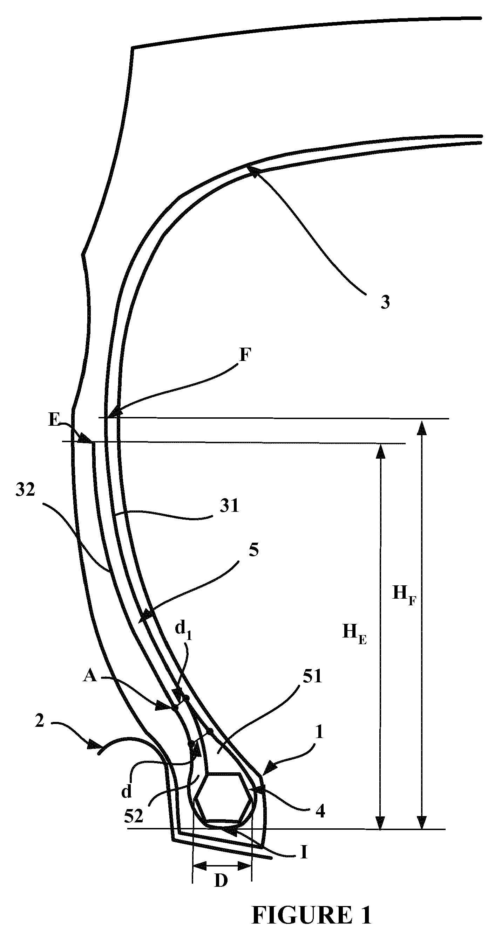

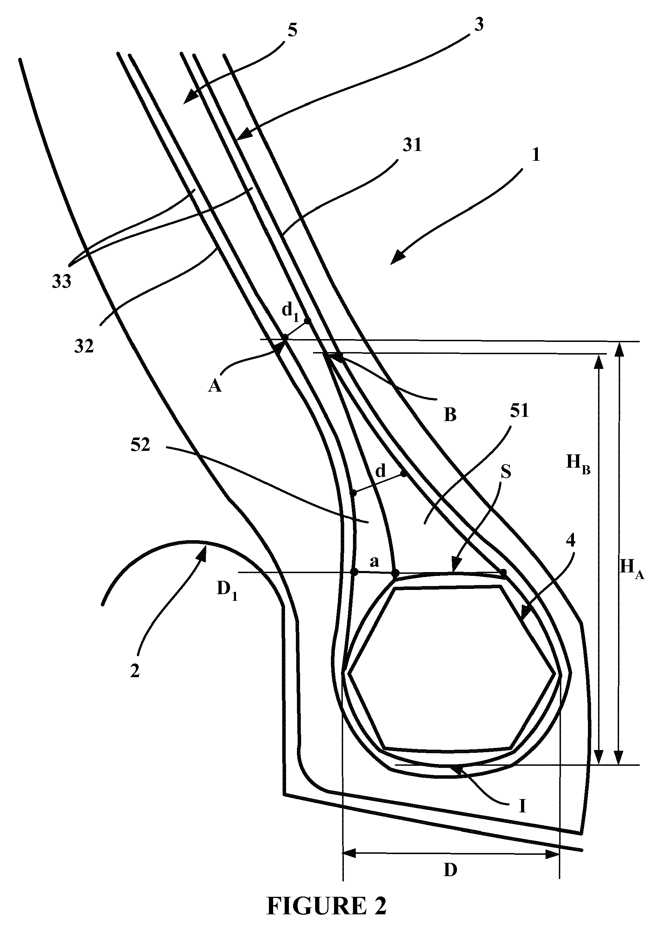

Les caractéristiques de l'invention seront mieux comprises à l'aide de la description des figures 1 et 2 en annexe, qui sont des représentations simplifiées non représentées à l'échelle:
- la figure 1 présente une demi-vue en coupe, dans un plan méridien, d'un pneumatique pour véhicule lourd de type génie civil, selon l'invention.
- la figure 2 présente une vue en coupe, dans un plan méridien, du bourrelet d'un pneumatique pour véhicule lourd de type génie civil, selon l'invention.

Sur la figure 1, est représenté un pneumatique pour véhicule lourd de type génie civil selon l'invention, comprenant deux bourrelets 1 (dont un seul est représenté) destinés à entrer en contact avec une jante 2. Le pneumatique comprend une armature de carcasse comprenant une seule couche de carcasse 3, comprenant une partie principale 31 s'enroulant dans le bourrelet 1, de l'intérieur vers l'extérieur du pneumatique, autour d'une tringle 4 de section méridienne hexagonale, inscrite dans un cercle de diamètre D, pour former un retournement 32. La distance d entre le retournement 32 et la partie principale 31, mesurée perpendiculairement au retournement 32, décroît continûment, radialement vers l'extérieur, à partir de la tringle 4, et passe par une valeur minimale d₁. La couche de carcasse 3 est constituée de renforts parallèles entre eux, enrobés dans un mélange d'enrobage (non représentés). Un élément de remplissage 5 s'étend axialement entre le retournement 32 et la partie principale 31 et radialement vers l'extérieur à partir de la tringle 4. L'élément de remplissage 5 comprend deux mélanges de remplissage (51, 52). Un premier mélange de remplissage 51 s'étend radialement vers l'extérieur à partir de la tringle 4. Un deuxième mélange de remplissage 52 s'étend, radialement vers l'extérieur, à partir de la tringle 4, le long du retournement 32, au-delà du point A du retournement 32, positionné à la distance minimale d₁ de la partie principale 31, et s'étend, au moins en partie, axialement vers l'extérieur, à partir du premier mélange de remplissage 51. Sont également représentées, sur la figure 1, la distance radiale H_{E} entre le point E, le plus radialement extérieur du retournement 32, et le point I, le plus radialement intérieur de la tringle 4, ainsi que la distance radiale H_{F} entre le point F, le plus axialement extérieur de la partie principale 31, et le point I, le plus radialement intérieur de la tringle 4. Le rapport H_{E}/H_{F} caractérise la longueur relative du retournement 32. Dans le cas présent, est représenté un retournement 32 dit long.

La figure 2 présente une vue détaillé en coupe d'un bourrelet 1 selon l'invention. En plus des éléments déjà décrits sur la figure 1, est représentée la couche de carcasse 3 de façon non plus filaire mais en épaisseur, ce qui fait apparaître le mélange d'enrobage 33, dans lequel sont enrobés les renforts de la couche de carcasse (non représentés). L'épaisseur du deuxième mélange de remplissage 52, au voisinage de la partie haute de la tringle 4, est caractérisée par la distance axiale a entre le premier mélange de remplissage 51 et le retournement 32, mesurée selon la droite axiale D₁ passant par le point S le plus radialement extérieur de la tringle 4. La figure 2 présente en outre un mode de réalisation préféré, selon lequel le point B, le plus radialement extérieur du premier mélange de remplissage 51, et en contact avec la partie principale 31, est radialement intérieur au point A du retournement 32, positionné à la distance minimale d₁ de la partie principale 31. En d'autres termes, la distance radiale H_{A} entre le point A du retournement 32, positionné à la distance minimale d₁ de la partie principale 31, et le point I, le plus radialement intérieur de la tringle 4, est supérieure à la distance radiale H_{B} entre le point B, le plus radialement extérieur du premier mélange de remplissage 51, et en contact avec la partie principale 31 et le point I, le plus radialement intérieur de la tringle 4.

L'invention a été en particulier étudiée dans le cas d'un pneumatique pour gros dumper de dimension 59/80R63, à retournement long, caractérisé par une distance radiale H_{E} égale à 57 cm à comparer à une distance radiale H_{F} égale à 60 cm. La tringle 4 du pneumatique a un diamètre D égal à 9 cm. L'élément de remplissage 5 comprend un premier et deuxième mélanges de remplissage (51, 52), dont les modules d'élasticité respectifs à 10% d'allongement sont égaux à 9.5 MPa et 6 MPa, le deuxième mélange de remplissage 52 et le mélange d'enrobage 33 ayant des compositions chimiques identiques. Concernant l'épaisseur du deuxième mélange de remplissage 52, la distance axiale a entre le premier mélange de remplissage 51 et le retournement 32, mesurée selon la droite axiale D₁ passant par le point S le plus radialement extérieur de la tringle 4 est égale à 2 cm, donc supérieure à 0.15 fois et inférieure à 0.3 fois le diamètre D de la tringle. La distance radiale H_{B} entre le point B, le plus radialement extérieur du premier mélange de remplissage 51, et en contact avec la partie principale 31 et le point I, le plus radialement intérieur de la tringle 4, est égale à 19 cm. La distance radiale H_{A} entre le point A du retournement 32, positionné à la distance minimale d₁ de la partie principale 31, égale à 1.5 cm, et le point I, le plus radialement intérieur de la tringle 4, est égale à 20 cm. Radialement à l'extérieur du point A, la distance d reste sensiblement constante à la valeur minimale d₁ égale à 1.5 cm, sur une portion de retournement de longueur 5 cm, puis croît à nouveau en passant par une valeur maximale égale à 2.5 cm.

Des simulations de calculs par éléments finis, réalisées sur un pneumatique selon l'invention, ont montré que la décohésion à l'interface entre le mélange d'enrobage et le deuxième mélange de remplissage, au voisinage de la partie haute de la tringle, était retardée par rapport au pneumatique de référence.

L'invention peut être étendue à d'autres configurations de bourrelet, comprenant, par exemple et de façon non exhaustive:
- un ou plusieurs mélanges de remplissage axialement intercalées entre les premier et deuxième mélanges de remplissage,
- un empilement radial de plus de deux mélanges de remplissage.

## Revendications

1. Pneumatique pour véhicule lourd de type génie civil comprenant :
- deux bourrelets (1) destinés à entrer en contact avec une jante (2),
- une armature de carcasse comprenant au moins une couche de carcasse (3) comprenant une partie principale (31) s'enroulant dans chaque bourrelet (1), de l'intérieur vers l'extérieur du pneumatique, autour d'une tringle (4) de section méridienne sensiblement circulaire de diamètre D, pour former un retournement (32),
- la distance (d) entre le retournement (32) et la partie principale (31) décroissant continûment, radialement vers l'extérieur, à partir de la tringle (4), et passant par une valeur minimale (d₁),
- la couche de carcasse (3) étant constituée de renforts parallèles entre eux, enrobés dans un mélange d'enrobage (33),
- un élément de remplissage (5) s'étendant axialement entre le retournement (32) et la partie principale (31) et radialement vers l'extérieur à partir de la tringle (4),
- l'élément de remplissage (5) comprenant au moins deux mélanges de remplissage (51, 52),
- un premier mélange de remplissage (51) s'étendant radialement vers l'extérieur à partir de la tringle (4),
- le premier mélange de remplissage (51) ayant un module d'élasticité à 10% d'allongement au moins égal au module d'élasticité à 10% d'allongement d'un deuxième mélange de remplissage (52),
- le deuxième mélange de remplissage (52) s'etendant, radialement vers l'extérieur, à partir de la tringle (4), le long du retournement (32), au moins jusqu'au point (A) du retournement (32), positionné à la distance minimale (d₁) de la partie principale (31), et s'étendant, au moins en partie, axialement vers l'extérieur, à partir du premier mélange de remplissage (51), **caractérisé en ce que** le module d'élasticité à 10% d'allongement du deuxième mélange de remplissage (52) est égal au module d'élasticité à 10% d'allongement du mélange d'enrobage (33).

2. Pneumatique pour véhicule lourd de type génie civil selon la revendication 1, **caractérisé en ce que** le deuxième mélange de remplissage (52) a la même composition chimique que le mélange d'enrobage (33).

3. Pneumatique pour véhicule lourd de type génie civil selon l'une quelconque des revendications 1 ou 2, **caractérisé en ce que** la distance axiale (a) entre le premier mélange de remplissage (51) et le retournement (32), mesurée selon la droite axiale (D₁) passant par le point (S) le plus radialement extérieur de la tringle (4), est au moins égale à 0.15 fois le diamètre D de la tringle (4).

4. Pneumatique pour véhicule lourd de type génie civil selon l'une quelconque des revendications 1 à 3, **caractérisé en ce que** la distance axiale (a) entre le premier mélange de remplissage (51) et le retournement (32), mesurée selon la droite axiale (D₁) passant par le point (S) le plus radialement extérieur de la tringle (4), est au plus égale à 0.5 fois le diamètre D de la tringle (4), de préférence au plus égale à 0.3 fois le diamètre D de la tringle (4).

5. Pneumatique pour véhicule lourd de type génie civil selon l'une quelconque des revendications 1 à 4, **caractérisé en ce que** le point (B), le plus radialement extérieur du premier mélange de remplissage (51), et en contact avec la partie principale (31), est radialement intérieur au point (A) du retournement (32), positionné à la distance minimale (d₁) de la partie principale (31).

6. Pneumatique pour véhicule lourd de type génie civil selon l'une quelconque des revendications 1 à 5, **caractérisé en ce que** la distance radiale (H_{A}) entre le point (A) du retournement (32), positionné à la distance minimale (d₁) de la partie principale (31), et le point (I), le plus radialement intérieur de la tringle (4), est au moins égale à 1.5 fois le diamètre D de la tringle (4).

7. Pneumatique pour véhicule lourd de type génie civil selon l'une quelconque des revendications 1 à 6, **caractérisé en ce que** la distance radiale (H_{A}) entre le point (A) du retournement (32), positionné à la distance minimale (d₁) de la partie principale (31), et le point (I), le plus radialement intérieur de la tringle (4), est au plus égale à 4 fois le diamètre D de la tringle (4).

8. Pneumatique pour véhicule lourd de type génie civil selon l'une quelconque des revendications 1 à 7, **caractérisé en ce que** la distance (d) entre le retournement (32) et la partie principale (31) croît continûment, radialement vers l'extérieur, à partir du point (A) du retournement (32), positionné à la distance minimale (d₁) de la partie principale (31), et passe par une distance maximale entre le retournement (32) et la partie principale (31).

9. Pneumatique pour véhicule lourd de type génie civil selon l'une quelconque des revendications 1 à 7, **caractérisé en ce que** la distance (d) entre le retournement (32) et la partie principale (31) est égale à une valeur constante, radialement vers l'extérieur, à partir du point (A) du retournement (32), positionné à la distance minimale (d₁) de la partie principale (31), sur au moins une portion du retournement (32) .

10. Pneumatique pour véhicule lourd de type génie civil selon l'une quelconque des revendications 1 à 9, **caractérisé en ce que** la distance radiale (H_{E}) entre le point (E), le plus radialement extérieur du retournement (32), et le point (I), le plus radialement intérieur de la tringle (4), est au moins égale à 0.8 fois la distance radiale (H_{F}) entre le point (F), le plus axialement extérieur de la partie principale (31), et le point (I), le plus radialement intérieur de la tringle (4).

## Patentansprüche

1. Reifen für Schwerlastfahrzeuge vom Baugerätetyp, umfassend:
- zwei Wülste (1), die dazu bestimmt sind, mit einer Felge (2) in Kontakt zu kommen,
- eine Karkassenbewehrung mit mindestens einer Karkassenlage (3), die einen Hauptabschnitt (31) umfasst, der sich in jede Wulst (1) von der Innenseite zu der Außenseite des Reifens um einen Wulstkern (4) mit einem im Wesentlichen kreisförmigen Meridianquerschnitt des Durchmessers D einrollt, um einen Umschlag (32) zu bilden,
- wobei der Abstand (d) zwischen dem Umschlag (32) und dem Hauptabschnitt (31) von dem Wulstkern (4) radial nach außen kontinuierlich abnimmt und einen Minimalwert (d₁) durchläuft,
- wobei die Karkassenlage (3) aus zueinander parallelen Verstärkungen besteht, die in ein Umhüllungsgemisch (33) eingebettet sind,
- ein Füllelement (5), das sich axial zwischen dem Umschlag (32) und dem Hauptabschnitt (31) und von dem Wulstkern (4) radial nach außen erstreckt,
- wobei das Füllelement (5) mindestens zwei Füllungsgemische (51, 52) umfasst,
- wobei ein erstes Füllungsgemisch (51) sich von dem Wulstkern (4) radial nach außen erstreckt,
- wobei das erste Füllungsgemisch (51) ein Elastizitätsmodul bei 10 % Dehnung hat, das mindestens gleich dem Elastizitätsmodul bei 10 % Dehnung eines zweiten Füllungsgemisches (52) ist,
- wobei das zweite Füllungsgemisch (52) sich von dem Wulstkern (4) radial nach außen entlang dem Umschlag (32) erstreckt, mindestens bis zu dem Punkt (A) des Umschlags (32), der in dem Mindestabstand (d₁) von dem Hauptabschnitt (31) positioniert ist und sich zumindest teilweise von dem ersten Füllungsgemisch (51) in Achsrichtung nach außen erstreckt,
**dadurch gekennzeichnet, dass** das Elastizitätsmodul bei 10 % Dehnung des zweiten Füllungsgemisches (52) gleich dem Elastizitätsmodul bei 10 % Dehnung des Umhüllungsgemisches (33) ist.

2. Reifen für Schwerlastfahrzeuge vom Baugerätetyp nach Anspruch 1, **dadurch gekennzeichnet, dass** das zweite Füllungsgemisch (52) die gleiche chemische Zusammensetzung hat wie das Umhüllungsgemisch (33).

3. Reifen für Schwerlastfahrzeuge vom Baugerätetyp nach einem der Ansprüche 1 oder 2, **dadurch gekennzeichnet, dass** der axiale Abstand (a) zwischen dem ersten Füllungsgemisch (51) und dem Umschlag (32), gemessen entlang der axialen Geraden (D₁), die durch den radial äußersten Punkt (S) des Wulstkerns (4) verläuft, mindestens gleich dem 0,15-Fachen des Durchmessers D des Wulstkerns (4) ist.

4. Reifen für Schwerlastfahrzeuge vom Baugerätetyp nach einem der Ansprüche 1 bis 3, **dadurch gekennzeichnet, dass** der axiale Abstand (a) zwischen dem ersten Füllungsgemisch (51) und dem Umschlag (32), gemessen entlang der axialen Geraden (D₁), die durch den radial äußersten Punkt (S) des Wulstkerns (4) verläuft, höchstens gleich dem 0,5-Fachen des Durchmessers D des Wulstkerns (4), vorzugsweise höchstens gleich dem 0,3-Fachen des Durchmessers D des Wulstkerns (4), ist.

5. Reifen für Schwerlastfahrzeuge vom Baugerätetyp nach einem der Ansprüche 1 bis 4, **dadurch gekennzeichnet, dass** der radial äußerste Punkt (B) des ersten Füllungsgemisches (51), der mit dem Hauptabschnitt (31) in Kontakt ist, gegenüber dem Punkt (A) des Umschlags (32), der im Minimalabstand (d₁) von dem Hauptabschnitt (31) positioniert ist, radial innen ist.

6. Reifen für Schwerlastfahrzeuge vom Baugerätetyp nach einem der Ansprüche 1 bis 5, **dadurch gekennzeichnet, dass** der radiale Abstand (H_{A}) zwischen dem Punkt (A) des Umschlags (32), der im Minimalabstand (d₁) von dem Hauptabschnitt (31) positioniert ist, und dem Punkt (I), dem radial innersten Punkt des Wulstkerns (4), mindestens gleich dem 1,5-Fachen des Durchmessers D des Wulstkerns (4) ist.

7. Reifen für Schwerlastfahrzeuge vom Baugerätetyp nach einem der Ansprüche 1 bis 6, **dadurch gekennzeichnet, dass** der radiale Abstand (H_{A}) zwischen dem Punkt (A) des Umschlags (32), der im Minimalabstand (d₁) von dem Hauptabschnitt (31) positioniert ist, und dem Punkt (I), dem radial innersten Punkt des Wulstkerns (4), höchstens gleich dem 4-Fachen des Durchmessers D des Wulstkerns (4) ist.

8. Reifen für Schwerlastfahrzeuge vom Baugerätetyp nach einem der Ansprüche 1 bis 7, **dadurch gekennzeichnet, dass** der Abstand (d) zwischen dem Umschlag (32) und dem Hauptabschnitt (31) von dem Punkt (A) des Umschlags (32), der im Minimalabstand (d₁) von dem Hauptabschnitt (31) positioniert ist, radial nach außen kontinuierlich zunimmt und einen Maximalabstand zwischen dem Umschlag (32) und dem Hauptabschnitt (31) durchläuft.

9. Reifen für Schwerlastfahrzeuge vom Baugerätetyp nach einem der Ansprüche 1 bis 7, **dadurch gekennzeichnet, dass** der Abstand (d) zwischen dem Umschlag (32) und dem Hauptabschnitt (31) von dem Punkt (A) des Umschlags (32), der im Minimalabstand (d₁) von dem Hauptabschnitt (31) positioniert ist, radial nach außen an mindestens einem Teil des Umschlags (32) gleich einem konstanten Wert ist.

10. Reifen für Schwerlastfahrzeuge vom Baugerätetyp nach einem der Ansprüche 1 bis 9, **dadurch gekennzeichnet, dass** der radiale Abstand (H_{E}) zwischen dem radial äußersten Punkt (E) des Umschlags (32) und dem radial innersten Punkt (I) des Wulstkerns (4) mindestens gleich dem 0,8-Fachen des radialen Abstands (H_{F}) zwischen dem in Achsrichtung äußersten Punkt (F) des Hauptabschnittes (31) und dem radial innersten Punkt (I) des Wulstkerns (4) ist.

## Claims

1. Tyre for a heavy vehicle of construction plant type, comprising:
- two beads (1) intended to come into contact with a rim (2),
- a carcass reinforcement comprising at least one carcass layer (3) comprising a main part (31) wrapped, in each bead (1), from the inside of the tyre to the outside, around a bead wire (4) with an approximately circular meridian section of diameter D, so as to form a turn-up,
- the distance (d) between the turn-up (32) and the main part (31) decreasing continuously, radially towards the outside, from the bead wire (4), and passing through a minimum value (d₁),
- the carcass layer (3) being made up of mutually parallel reinforcers that are coated in a coating compound (33),
- a filling element (5) extending axially between the turn-up (32) and the main part (31) and radially outwards from the bead wire (4),
- the filling element (5) comprising at least two filling compounds (51, 52),
- a first filling compound (51) extending radially outwards from the bead wire (4),
- the first filling compound (51) having a modulus of elasticity at 10% elongation at least equal to the modulus of elasticity at 10% elongation of a second filling compound (52),
the second filling compound (52) extending, radially outwards, from the bead wire (4), along the turn-up (32), at least as far as that point (A) of the turn-up (32) that is positioned at the minimum distance (d₁) from the main part (31), and extending axially outwards, at least in part, from the first filling compound (51), **characterized in that** the modulus of elasticity at 10% elongation of the second filling compound (52) is equal to the modulus of elasticity at 10% elongation of the coating compound (33).

2. Tyre for a heavy vehicle of construction plant type according to Claim 1, **characterized in that** the second filling compound (52) has the same chemical composition as the coating compound (33).

3. Tyre for a heavy vehicle of construction plant type according to either of Claims 1 and 2, **characterized in that** the axial distance (a) between the first filling compound (51) and the turn-up (32), measured along the axial straight line (D₁) passing through the radially outermost point (S) of the bead wire (4), is at least equal to 0.15 times the diameter D of the bead wire (4).

4. Tyre for a heavy vehicle of construction plant type according to any one of Claims 1 to 3, **characterized in that** the axial distance (a) between the first filling compound (51) and the turn-up (32), measured along the axial straight line (D₁) passing through the radially outermost point (S) of the bead wire (4), is at most equal to 0.5 times the diameter D of the bead wire (4), preferably at most equal to 0.3 times the diameter D of the bead wire (4).

5. Tyre for a heavy vehicle of construction plant type according to any one of Claims 1 to 4, **characterized in that** the radially outermost point (B) of the first filling compound (51), in contact with the main part (31), is radially on the inside of that point (A) of the turn-up (32) that is positioned at the minimum distance (d₁) from the main part (31).

6. Tyre for a heavy vehicle of construction plant type according to any one of Claims 1 to 5, **characterized in that** the radial distance (H_{A}) between that point (A) of the turn-up (32) that is positioned at the minimum distance (d₁) from the main part (31) and the radially innermost point (I) of the bead wire (4) is at least equal to 1.5 times the diameter D of the bead wire (4).

7. Tyre for a heavy vehicle of construction plant type according to any one of Claims 1 to 6, **characterized in that** the radial distance (H_{A}) between that point (A) of the turn-up (32) that is positioned at the minimum distance (d₁) from the main part (31) and the radially innermost point (I) of the bead wire (4) is at most equal to 4 times the diameter D of the bead wire (4).

8. Tyre for a heavy vehicle of construction plant type according to any one of Claims 1 to 7, **characterized in that** the distance (d) between the turn-up (32) and the main part (31) increases continuously, radially towards the outside, from that point (A) of the turn-up (32) that is positioned at the minimum distance (d₁) from the main part (31) and passes through a maximum distance between the turn-up (32) and the main part (31).

9. Tyre for a heavy vehicle of construction plant type according to any one of Claims 1 to 7, **characterized in that** the distance (d) between the turn-up (32) and the main part (31) is equal to a constant value, radially towards the outside, from that point (A) of the turn-up (32) that is positioned at the minimum distance (d₁) from the main part (31), over at least a portion of the turn-up (32).

10. Tyre for a heavy vehicle of construction plant type according to any one of Claims 1 to 9, **characterized in that** the radial distance (H_{E}) between the radially outermost point (E) of the turn-up (32) and the radially innermost point (I) of the bead wire is at least equal to 0.8 times the radial distance (H_{F}) between the axially outermost point (F) of the main part (31) and the radially innermost point (I) of the bead wire (4).
